# EUROPÄISCHE PATENTSCHRIFT

(11) **EP 3 404 183 B1**
(45) Veröffentlichungstag und Bekanntmachung des Hinweises auf die Patenterteilung: **01.05.2024**
(21) Anmeldenummer: 18160113.9
(22) Anmeldetag: 06.03.2018
(51) Int. Cl.: E05F 15/632, E05F 15/73, G06F 12/06, G06F 13/40

(54) **AUTOMATISCHE TÜR- ODER FENSTERANLAGE**
AUTOMATIC DOOR OR WINDOW INSTALLATION
INSTALLATION DE PORTE OU DE FENÊTRE AUTOMATIQUE

(30) Priorität: 19.05.2017 DE 102017208502
(43) Veröffentlichungstag der Anmeldung: 21.11.2018
(73) Patentinhaber: GEZE GmbH, 71229 Leonberg (DE)
(72) Erfinder: Katz, Eugen, 71139 Ehningen (DE); Palminteri, Daniel, 76327 Pfinztal (DE); Pirincci, Aykut, 47057 Duisburg (DE)

(56) Entgegenhaltungen:
- EP-A2- 0 937 854
- DE-A1- 4 344 729
- DE-A1-102006 025 174
- US-A1- 2014 246 902

## Beschreibung

Die Erfindung betrifft eine automatische Tür- oder Fensteranlage mit einer Antriebsvorrichtung, einer Steuereinheit, wenigstens einer Sensoreinheit und wenigstens einem über die Antriebsvorrichtung antreibbaren Flügel. Dabei kann es sich bei einer Türanlage um eine Schiebetür- oder eine Drehtüranlage und bei dem wenigstens einen antreibbaren Flügel entsprechend um einen Schiebe- oder Drehflügel handeln.

Das automatische Öffnen und Schließen von Türen automatischer Türanlagen wird über Sensoren angesteuert und abgesichert. Dabei können die Sensoren einzeln ausgeführt oder in einem Gerät kombiniert sein. Zu den üblicherweise eingesetzten Sensoren zählen entsprechend der Ansteuerung wie insbesondere dem automatischen Öffnen der Tür dienende Ansteuerungssensoren, der Absicherung der Tür dienende Anwesenheitssensoren und kombinierte Ansteuerungs- und Anwesenheitssensoren.

Je nach Position bzw. Installationsort an der Tür des Sensors und der Parametrierung reagiert die Steuereinheit anders auf die Aktivierung eines jeweiligen Sensors. So überwacht ein innen bzw. innerhalb des durch die betreffende Tür verschließbaren Raumes angeordneter Ansteuerungssensor den inneren Bereich vor der Tür. Bei einer jeweiligen Aktivierung eines solchen Ansteuerungssensors wird das automatische Öffnen der Tür ausgelöst. Ein außen bzw. außerhalb des durch die betreffende Tür verschließbaren Raumes angeordneter Ansteuerungssensor überwacht den äußeren Bereich vor der Tür. Bei einer jeweiligen Aktivierung eines solchen Ansteuerungssensors wird das automatische Öffnen der Tür ausgelöst. Ein jeweiliger Anwesenheitssensor "Öffnen" dient als Sicherheitssensor, der das Öffnen der Tür überwacht. Bei Drehtüren befindet sich ein solcher Sensor auf der Bandseite. Bei einer jeweiligen Aktivierung wird das automatische Öffnen der Tür gestoppt. Ein Anwesenheitssensor "Schließen" dient als Sicherheitssensor, der das Schließen der Tür überwacht. Bei Drehtüren befindet sich ein solcher Sensor auf der Bandgegenseite. Bei einer jeweiligen Aktivierung wird das automatische Schließen der Tür gestoppt, und die Tür öffnet wieder automatisch.

Über eine entsprechende Parametrierung der Steuerung kann die betreffende Aktion des jeweiligen Sensors angepasst werden. Die innen angeordneten Ansteuerungssensoren und außen angeordneten Ansteuerungssensoren können baugleich ausgeführt sein. Dasselbe trifft auf die Anwesenheitssensoren "Öffnen" und die Anwesenheitssensoren "Schließen" zu.

Die jeweilige Position der Sensoren wird bisher über die Verdrahtung des Einrichters festgelegt. Dazu wird jeder Sensor über ein getrenntes Kabel an die Steuerung angeschlossen. Dabei muss der Einrichter die Sensoren dem richtigen Eingang an der Steuerung zuordnen. Zudem besitzt jeder Sensor bisher einen schaltenden Ausgang wie beispielsweise ein Relais, einen Transistor oder dergleichen, der bei einer jeweiligen Aktivierung des Sensors seinen Pegel ändert. Wird ein solcher Ausgang an der Steuerung zum Beispiel an der Klemme für den Anwesenheitssensor mit der Funktion "Öffnen" verdrahtet, erkennt die Tür bei ansprechendem Sensor, dass sich ein Objekt oder eine Person im Öffnungsbereich befindet, woraufhin das automatische Öffnen gestoppt wird.

Die Inbetriebnahme derartiger bisheriger automatischer Tür- oder Fensteranlagen ist relativ aufwendig und entsprechend kostspielig. Zudem ist die Gefahr einer fehlerhaften Installation relativ groß. Schließlich ist auch eine jeweils erforderliche Anpassung der Steuerung an vorgenommene Änderungen der Tür- oder Fensteranlage relativ schwierig.

Die DE 43 44 729 A1 bildet einen gattungsgemäßen Stand der Technik ab.

Der Erfindung liegt die Aufgabe zugrunde, eine automatische Tür- oder Fensteranlage der eingangs genannten Art anzugeben, bei der die zuvor genannten Nachteile beseitigt sind. Dabei soll insbesondere die Inbetriebnahme der Tür- oder Fensteranlage vereinfacht werden und entsprechend zuverlässiger sowie kostengünstiger durchführbar sein.

Erfindungsgemäß wird diese Aufgabe durch eine automatische Tür- oder Fensteranlage mit den Merkmalen des Anspruchs 1 gelöst. Bevorzugte Ausführungsformen der erfindungsgemäßen automatischen Tür- oder Fensteranlage ergeben sich aus den Unteransprüchen, der vorliegenden Beschreibung sowie der Zeichnung.

Die erfindungsgemäße automatische Tür- oder Fensteranlage umfasst eine Antriebsvorrichtung, eine Steuereinheit, wenigstens eine Sensoreinheit und wenigstens einen über die Antriebsvorrichtung antreibbaren Flügel. Die wenigstens eine Sensoreinheit und die Steuereinheit bilden Teilnehmer eines Datenübertragungssystems, über das sie miteinander verbunden sind. Wenigstens eine Sensoreinheit umfasst zumindest zwei der Codierung unterschiedlicher Positionen der Sensoreinheit an der Tür bzw. am Fenster dienende Steckplätze für den Anschluss der Sensoreinheit an das Datenübertragungssystem. Alternativ oder zusätzlich kann wenigstens eine Sensoreinheit darüber hinaus wenigstens einen dritten Steckplatz zur Weiterverbindung des Datenübertragungssystems und den Anschluss eines weiteren Teilnehmers an das Datenübertragungssystem umfassen.

Aufgrund dieser Ausbildung wird die Inbetriebnahme einer jeweiligen Tür- oder Fensteranlage wesentlich vereinfacht, womit die Inbetriebnahme nicht nur in kürzerer Zeit, sondern auch zuverlässiger und kostengünstiger durchführbar ist. Indem die wenigstens eine Sensoreinheit und die Steuereinheit über das intelligente Datenübertragungssystem miteinander kommunizieren können, kann bei einer jeweiligen Aktivierung einer Sensoreinheit eine entsprechende Nachricht über dieses Datenübertragungssystem übermittelt werden, anhand der die Zuordnung der Art der Sensoreinheit und deren Position erfolgen kann. Nachdem die Position einer jeweiligen Sensoreinheit über die steckplatzbezogene Positionscodierung, d.h. in Abhängigkeit davon, über welchen Steckplatz deren Anschluss an das Datenübertragungssystem erfolgt ist, erfasst wird, kann der bisher erforderliche, an der Steuerung zu verdrahtende Schaltausgang entfallen. Sämtliche jeweils vorhandene Sensoreinheiten können ebenso wie die Steuereinheit Teilnehmer an demselben intelligenten Datenübertragungssystem sein. Zumindest ein Teilnehmer des Datenübertragungssystems kann mit dem Anschluss an das Datenübertragungssystem und der entsprechenden Belegung eines bestimmten Steckplatzes parametriert werden.

Bevorzugt erfolgt die steckplatzbezogene Positionscodierung einer jeweiligen Sensoreinheit bei deren Anschluss an das Datenübertragungssystem durch Einstecken eines Verbindungskabels oder dergleichen des Datenübertragungssystems in einen betreffenden Steckplatz der wenigstens zwei der Codierung unterschiedlichen Positionen dienenden Steckplätze der Sensoreinheit.

Die Position einer jeweiligen Sensoreinheit kann vom Einrichter somit durch das Einstecken des Verbindungskabels am entsprechenden Steckplatz bestimmt werden. Daraufhin kann die betreffende Sensoreinheit automatisch ermitteln, an welchem Steckplatz das Verbindungskabel eingesteckt wurde, um daraus ihre jeweilige Position abzuleiten. Über eine entsprechende Nachricht über das Datenübertragungssystem kann die Sensoreinheit dann wenigstens einem anderen Teilnehmer und insbesondere der Steuereinheit ihre Position bekanntgeben. Schließlich kann die Steuereinheit der betreffenden Sensoreinheit über durch das Datenübertragungssystem übermittelte Nachrichten die für ihre spezielle Position eingerichteten Parameter mitteilen. Ebenso kann eine eventuelle Änderung der Parameter für eine spezielle Sensorposition der betreffenden Sensoreinheit mittels entsprechender Nachrichten über das Datenübertragungssystem übermittelt werden.

Die betreffende Sensoreinheit kann dann die für ihre spezielle Position übermittelten Parameter übernehmen.

Gemäß einer bevorzugten praktischen Ausführungsform der erfindungsgemäßen automatischen Tür- oder Fensteranlage umfasst ein für den Anschluss einer jeweiligen Sensoreinheit an das Datenübertragungssystem vorgesehenes Verbindungskabel oder dergleichen einen Stecker, der mit einem der Positionscodierung dienenden zusätzlichen Pin versehen ist.

Dabei ist eine jeweilige Sensoreinheit vorteilhafterweise so ausgeführt, dass durch Abfrage des zusätzlichen Pins ermittelbar ist, über welchen Steckplatz die Sensoreinheit gegebenenfalls an das Datenübertragungssystem angeschlossen wurde. Wird somit ein Stecker in einen bestimmten Steckplatz einer jeweiligen Sensoreinheit gesteckt, so kann durch Abfrage des zusätzlichen Pins ermittelt werden, welcher Steckplatz belegt wurde. Die jeweilige Sensoreinheit kann somit über den jeweiligen zusätzlichen Pin feststellen, welcher der der Codierung unterschiedlicher Positionen dienenden Steckplätze belegt wurde, um daraus deren jeweilige Position an der Tür bzw. dem Fenster abzuleiten. Über den korrekten Anschluss des Steckers kann somit die Position der jeweiligen Sensoreinheit konfiguriert werden.

Bevorzugt ist das Datenübertragungssystem zumindest für eine Kommunikation zwischen einer jeweiligen Sensoreinheit und der Steuereinheit ausgeführt.

Umfasst die automatische Tür- oder Fensteranlage mehrere Sensoreinheiten, so kann das Datenübertragungssystem zudem für eine Kommunikation zwischen den Sensoreinheiten ausgeführt sein.

Gemäß einer bevorzugten praktischen Ausführungsform der erfindungsgemäßen automatischen Tür- oder Fensteranlage ist eine jeweilige Sensoreinheit als eine einen Mikroprozessor oder dergleichen umfassende intelligente Einheit so ausgeführt, dass sie den mit einem jeweiligen Anschluss an das Datenübertragungssystem belegten Steckplatz identifiziert und eine entsprechende Positionsmeldung für die Steuereinheit erzeugt. In Abhängigkeit von der jeweiligen Positionsmeldung kann die Steuereinheit dann die entsprechende Parametrierung für diese Steuereinheit vornehmen.

Vorteilhafterweise ist eine jeweilige Sensoreinheit zudem so ausgeführt, dass sie eine ihre Art spezifizierende Meldung für die Steuereinheit erzeugt.

Anhand einer solchen Meldung kann die Steuereinheit somit zudem beispielsweise auch erkennen, ob es sich bei der Sensoreinheit um einen Ansteuerungssensor, einen Anwesenheitssensor oder einen kombinierten Ansteuerungs- und Anwesenheitssensor handelt.

Vorteilhafterweise ist eine jeweilige Sensoreinheit über die Steuereinheit in Abhängigkeit von der steckplatzbezogenen Positionsmeldung und/oder der die Art der Sensoreinheit spezifizierenden Meldung aktivierbar, parametrierbar, adressierbar und/oder dergleichen.

Die Steuereinheit kann als von der wenigstens einen Sensoreinheit getrennte Einheit und beispielsweise auch als dezentrale Steuereinheit ausgeführt oder in einer Sensoreinheit integriert sein.

Das Datenübertragungssystem umfasst bevorzugt eine Buseinrichtung. Dabei kann insbesondere die Steuereinheit als Bus-Master ausgeführt sein. Ist die Steuereinheit in einer Sensoreinheit integriert ist, so kann der Bus-Master auch durch eine solche Sensoreinheit gebildet sein.

Gemäß einer bevorzugten praktischen Ausführungsform der erfindungsgemäßen automatischen Tür- oder Fensteranlage umfasst diese wenigstens eine als Ansteuerungssensor ausgeführte Sensoreinheit, wenigstens eine als Anwesenheitssensor ausgeführte Sensoreinheit und/oder wenigstens eine als kombinierte Ansteuerungs- und Anwesenheitssensor ausgeführte Sensoreinheit.

Dabei ist die Steuereinheit ist bevorzugt so ausgeführt, dass sie in Abhängigkeit von einer jeweiligen steckplatzbezogenen Positionscodierung, d.h.in Abhängigkeit davon, über welchen Steckplatz eine jeweilige Sensoreinheit an das Datenübertragungssystem angeschlossen wurde, bezüglich eines jeweiligen Ansteuerungssensors zwischen den Positionen Innen und Außen, bezüglich eines jeweiligen Anwesenheitssensors zwischen einem Anwesenheitssensor "Schließen" und einem Anwesenheitssensor "Öffnen" und/oder bezüglich eines jeweiligen kombinierten Ansteuerungs- und Anwesenheitssensors zwischen den Positionen Innen und Außen unterscheidet.

Durch den dadurch sichergestellten korrekten Anschluss einer jeweiligen Sensoreinheit an das Datenübertragungssystem kann somit die jeweilige Sensorposition konfiguriert werden.

Auch die Steuereinheit als weiterer Teilnehmer des Datenübertragungssystems kann insbesondere wieder wenigstens einen Steckplatz für den Anschluss an das Datenübertragungssystem und wenigstens einen Steckplatz zur Weiterverbindung des Datenübertragungssystems aufweisen.

Die Erfindung wird im Folgenden anhand von Ausführungsbeispielen unter Bezugnahme auf die Zeichnung näher erläutert; in dieser zeigen:
- Fig. 1: eine schematische perspektivische Darstellung einer beispielhaften Ausführungsform einer erfindungsgemäßen Schiebetüranlage,
- Fig. 2: eine schematische Darstellung der Steckplätze der über ein Datenübertragungssystem miteinander verbundenen Steuereinheit und Sensoreinheiten der Schiebetüranlage gemäß Fig. 1,
- Fig. 3: eine schematische perspektivische Darstellung einer beispielhaften Ausführungsform einer erfindungsgemäßen Drehtüranlage, von der Bandseite her betrachtet,
- Fig. 4: eine schematische perspektivische Darstellung der Drehtüranlage gemäß Fig. 3, von der Gegenbandseite her betrachtet,
- Fig. 5: eine schematische Darstellung der Steckplätze der über ein Datenübertragungssystem miteinander verbundenen Steuereinheit und Sensoreinheiten der Drehtüranlage gemäß den Fig. 3 und 4, und
- Fig. 6: eine vergrößerte schematische Darstellung eines beispielhaften Steckplatzes mit mehreren Kontaktöffnungen zur Aufnahme entsprechender Pins eines Steckers eines Verbindungskabels für den Anschluss an das Datenübertragungssystem und einer weiteren Öffnung zur Aufnahme eines der Positionierung dienenden zusätzlichen Pins des Steckers.

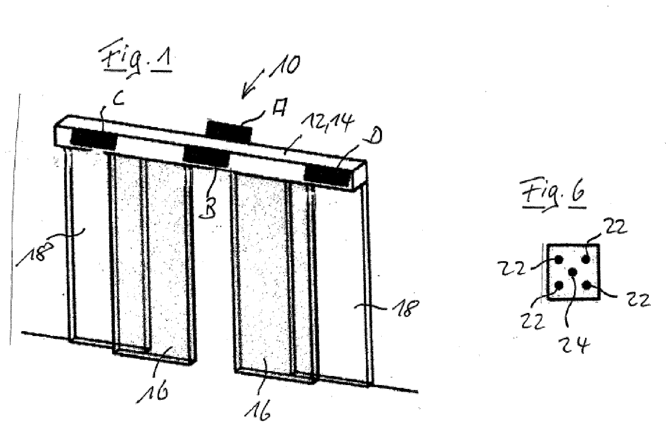

Fig. 1 zeigt in schematischer perspektivischer Darstellung eine beispielhafte Ausführungsform einer erfindungsgemäßen Schiebtüranlage 10 mit einer Antriebsvorrichtung 12, einer Steuereinheit 14, Sensoreinheiten A - D, zwei über die Antriebsvorrichtung 12 antreibbaren Schiebeflügeln 16 und zwei Festflügeln 18.

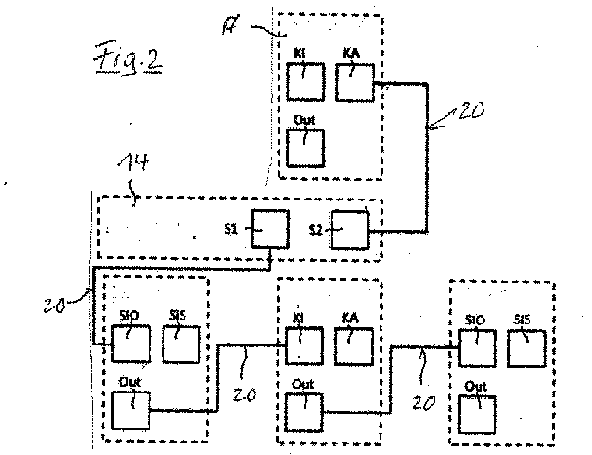

Die Sensoreinheiten A - D und die Steuereinheit 14 bilden Teilnehmer eines intelligenten Datenübertragungssystems 20 (vgl. auch Fig. 2), über das sie miteinander verbunden sind. Dabei reagiert die Steuereinheit 14 je nach Position bzw. Installationsort einer jeweiligen Sensoreinheit A - D und einer entsprechenden Parametrierung unterschiedlich auf eine jeweilige Aktivierung der Sensoreinheiten A - D.

Im vorliegenden Fall sind die beiden Sensoreinheiten A und B jeweils als Ansteuerungssensor und die beiden Sensoreinheiten C und D jeweils als Anwesenheitssensor ausgeführt. Dabei ist der Ansteuerungssensor A außen bzw. außerhalb des durch die Schiebetüranlage verschließbaren Raumes zur Überwachung des äußeren Bereiches vor der Tür vorgesehen. Bei einer Aktivierung dieses Ansteuerungssensors A wird das automatische Öffnen der Tür ausgelöst. Demgegenüber dient der innen angeordnete Ansteuerungssensor B der Überwachung des inneren Bereichs vor der Tür. Bei einer Aktivierung dieses Ansteuerungssensors B wird wieder das automatische Öffnen der Tür ausgelöst.

Die beiden Anwesenheitssensoren C und D sind jeweils innen bzw. innerhalb des durch die Schiebetüranlage 10 verschließbaren Raums angeordnet. Sie dienen jeweils als Sicherheitssensor, der das Öffnen der Tür überwacht. Bei einer Aktivierung dieser Anwesenheitssensoren C, D wird jeweils das automatische Öffnen der Tür gestoppt.

Die beiden im vorliegenden Fall baugleichen Ansteuerungssensoren A und B umfassen jeweils zwei der Codierung unterschiedlicher Positionen der Sensoreinheit A bzw. B an der Tür dienende Steckplätze KA, KI für den Anschluss der Sensoreinheit A, B an das Datenübertragungssystem 20. Dabei erfolgt über eine Belegung des Steckplatzes KA eine Codierung der Position "außen" und durch eine Belegung des Steckplatzes KI eine Codierung der Position "innen".

Auch die im vorliegenden Fall wieder baugleichen Anwesenheitssensoren C und D umfassen jeweils wieder zwei der Codierung unterschiedlicher Positionen der Sensoreinheit an der Tür dienende Steckplätze SIS, SID, wobei mit einer Belegung des Steckplatzes SIS die Position "außen" und mit einer Belegung des Steckplatzes SIO die Position "innen" belegt wird. Zudem umfassen die Sensoreinheiten A - D einen dritten Steckplatz Out zur Weiterverbindung des Datenübertragungssystems 20 und den Anschluss eines weiteren Teilnehmers an das Datenübertragungssystem 20.

Die Steuereinheit 14 ist ebenfalls Teilnehmer des Datenübertragungssystems 20 und über Anschlüsse S1, S2 an dieses Datenübertragungssystem 20 angeschlossen.

Die steckplatzbezogene Positionscodierung einer jeweiligen Sensoreinheit A - D erfolgt bei deren Anschluss an das Datenübertragungssystem 20 durch Einstecken eines Verbindungskabels oder dergleichen des Datenübertragungssystems 20 in einen betreffenden Steckplatz der beiden der Codierung unterschiedlicher Positionen dienenden Steckplätze KA, Kl; SIS, SIO der Sensoreinheit A - D.

Im vorliegenden Fall ist die Steuereinheit 14 über ihren Anschluss S1 und das Datenübertragungssystem 20 mit dem Steckplatz SIO des Ansteuerungssensors C und über ihren Anschluss S2 und das Datenübertragungssystem 20 mit dem Steckplatz KA des Ansteuerungssensors A verbunden. Der Ansteuerungssensor C steht über seinen Steckplatz Out und das Datenübertragungssystem 20 mit dem Steckplatz .KI des Ansteuerungssensors B in Verbindung. Der Ansteuerungssensor B ist über seinen Steckplatz Out und das Datenübertragungssystem 20 schließlich mit dem Steckplatz SIO des Ansteuerungssensors D verbunden.

Ein für den Anschluss einer jeweiligen Sensoreinheit A - D an das Datenübertragungssystem 20 vorgesehenes Verbindungskabel oder dergleichen kann beispielsweise einen Stecker umfassen, der mit einem der Positionscodierung dienenden zusätzlichen Pin versehen ist. In diesem Fall kann eine jeweilige Sensoreinheit A - D so ausgeführt sein, dass durch Abfrage des zusätzlichen Pins ermittelbar ist, über welchen Steckplatz KA, Kl; SIS, SIO die Sensoreinheit A - D gegebenenfalls an das Datenübertragungssystem 20 angeschlossen wurde.

In Fig. 6 ist in vergrößerter Darstellung ein beispielhafter Steckplatz mit mehreren Kontaktöffnungen 22 zur Aufnahme entsprechender Pins eines Steckers eines Verbindungskabels für den Anschluss an das Datenübertragungssystem 20 und einer weiteren Öffnung 24 zur Aufnahme eines solchen der Positionscodierung dienenden zusätzlichen Pins des Steckers wiedergegeben.

Das Datenübertragungssystem 20 ist zumindest für eine Kommunikation zwischen einer jeweiligen Sensoreinheit A - D und der Steuereinheit 14 ausgeführt. Zudem kann das Datenübertragungssystem 20 auch für eine Kommunikation zwischen den Sensoreinheiten A - D ausgeführt sein.

Eine jeweilige Sensoreinheit A - D kann als eine einen Mikroprozessor oder dergleichen umfassende intelligente Einheit so ausgeführt sein, dass sie den mit einem jeweiligen Anschluss an das Datenübertragungssystem 20 belegten Steckplatz KA, Kl; SIS, SIO identifiziert und eine entsprechende Positionsmeldung für die Steuereinheit 14 erzeugt. Zudem kann eine jeweilige Sensoreinheit A - D so ausgeführt sein, dass sie eine ihre Art spezifizierende Meldung für die Steuereinheit 14 erzeugt. Im vorliegenden Fall kann die Steuereinheit 14 anhand einer entsprechenden Meldung beispielsweise zwischen einem Ansteuerungssensor A, B oder einem Anwesenheitssensor C, D unterscheiden. Eine jeweilige Sensoreinheit A - D ist somit über die Steuereinheit 14 in Abhängigkeit von der steckplatzbezogenen Positionsmeldung und/oder der die Art der Sensoreinheit A - D spezifizierenden Meldung aktivierbar, parametrierbar, adressierbar und/oder dergleichen.

Beim in den Fig. 1 und 2 dargestellten Ausführungsbeispiel einer Schiebetüranordnung 10 ist die Steuereinheit 14 so ausgeführt, dass sie in Abhängigkeit von einer jeweiligen steckplatzbezogenen Positionscodierung bezüglich eines jeweiligen Ansteuerungssensors zwischen den Positionen Innen und Außen und bezüglich eines jeweiligen Anwesenheitssensors C, D zwischen einem Anwesenheitssensor "Schließen" und einem Anwesenheitssensor "Öffnen" unterscheidet. So erkennt die Steuereinheit 14 aufgrund der in der Fig. 2 dargestellten Steckplatzbelegung, dass der Ansteuerungssensor A außen (Steckplatz KA) und der Ansteuerungssensor B innen (Steckplatz KI) angeordnet ist. Zudem erkennt sie, dass die beiden Anwesenheitssensoren C und D jeweils innen angeordnet sind (Steckplätze SIO), so dass es sich hierbei jeweils um einen Sicherheitssensor "Öffnen" handelt, der das Öffnen der Tür überwacht, so dass bei einer Aktivierung eines solchen Sensors das automatische Öffnen der Tür gestoppt wird. Demgegenüber wird bei einer Aktivierung der Ansteuerungssensoren A, B jeweils das automatische Öffnen der Tür ausgelöst.

Die Steuereinheit 14 kann als von den Sensoreinheiten A - D getrennte Einheit und beispielswiese auch als dezentrale Steuerungseinheit ausgeführt oder auch in einer solchen Sensoreinheit integriert sein. Das Datenübertragungssystem 20 kann eine Buseinrichtung umfassen. Dabei kann insbesondere die Steuereinheit 14 als Bus-Master ausgeführt sein.

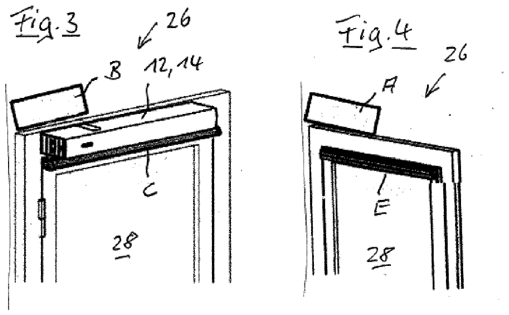

Fig. 3 zeigt in schematischer perspektivischer Darstellung eine beispielhafte Ausführungsform einer erfindungsgemäßen Drehtüranlage 26 von der Bandseite her betrachtet, während Fig. 4 diese Drehtüranlage 26 von der Gegenbandseite her betrachtet zeigt. Auch diese automatische Drehtüranlage 26 umfasst wieder eine Antriebsvorrichtung 12, eine Steuereinheit 14, einen außen angeordneten Ansteuerungssensor A, einen innen angeordneten Ansteuerungssensor B sowie einen innen angeordneten Anwesenheitssensor C. Zudem umfasst auch diese Drehtüranlage 26 wieder einen weiteren Anwesenheitssensor E, der im Gegensatz zum Anwesenheitssensor D der in den Fig. 1 und 2 dargestellten Schiebetüranlage 10 jedoch nicht innen, sondern außen angeordnet ist.

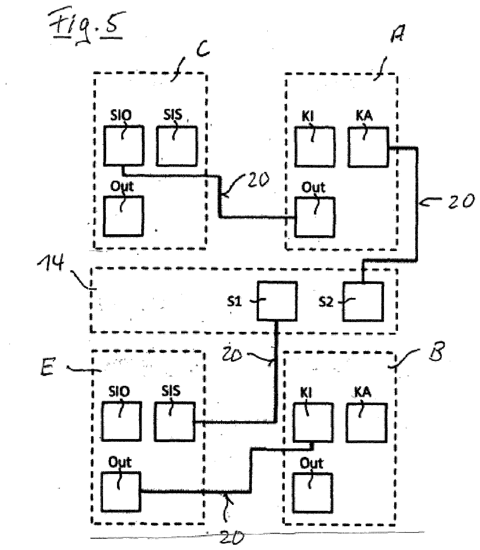

Fig. 5 zeigt in schematischer Darstellung die Steckplätze der wieder über ein Datenübertragungssystem 20 miteinander verbundenen Steuereinheit 14 und Sensoreinheiten A - C und E der in den Fig. 3 und 4 dargestellten Drehtüranlage 26. Wie anhand der Fig. 5 zu erkennen ist, ist im vorliegenden Fall die Steuereinheit 14 über den Anschluss S1 und das Datenübertragungssystem 20 mit dem der Position "außen" zugeordneten Steckplatz SIS des Anwesenheitssensors E verbunden, der über seinen Steckplatz Out und das Datenübertragungssystem 20 mit dem der Position "innen" zugeordneten Steckplatz KI des Ansteuerungssensors B verbunden ist. Über ihren Anschluss S2 und das Datenübertragungssystem 20 ist die Steuereinheit 14 mit dem der Position "außen" zugeordneten Steckplatz KA des Ansteuerungssensors A verbunden, der über seinen Steckplatz Out und das Datenübertragungssystem 20 mit dem der Position "innen" zugeordneten Steckplatz SIO des Ansteuerungssensors C verbunden ist.

Die Ansteuerungssensoren A und B der Drehtüranlage 26 sind somit mit denselben Steckplätzen Kl, KA und Out wie die Ansteuerungssensoren A und B der im Zusammenhang mit den Fig. 1 und 2 beschriebenen Schiebetüranlage 10 versehen sein. Die Steckplätze SIO, SIS und Out der beiden Anwesenheitssensoren C und E der Drehtüranlage 26 entsprechen den Steckplätzen SIO, SIS und Out der beiden Anwesenheitssensoren C und D der Schiebetüranlage 10. Im vorliegenden Fall ist jedoch der Anwesenheitssensor E außen bzw. auf der Gegenbandseite des Drehflügels 28 angeordnet, so dass im vorliegenden Fall mit dem Anschluss dieses Anwesenheitssensors E an das Datenübertragungssystem 20 dessen der Position "außen" zugeordnete Steckplatz SIS belegt wurde, was der Steuereinheit 14 wieder über das Datenübertragungssystem20 gemeldet wird. Dieser Anwesenheitssensor E der Drehtüranlage 26 dient hier also als äußerer Sicherheitssensor "Schließen", der das Schließen der Tür überwacht, so dass über die Steuereinheit 14 bei einer Aktivierung dieses Anwesenheitssensors E das automatische Schließen der Tür gestoppt und die Tür wieder automatisch geöffnet wird. Demgegenüber dient der innere bzw. auf der Bandseite vorgesehene Anwesenheitssensor C der Drehtüranlage 26 als Sicherheitssensor "Öffnen", der das Öffnen der Tür überwacht, so dass bei dessen Aktivierung das automatische Öffnen der Tür gestoppt werden kann. Der äußere Ansteuerungssensor A und der innere Ansteuerungssensor B der Drehtüranlage 26 dient wieder der Überwachung des äußeren bzw. des inneren Bereichs der Tür, so dass über die Steuereinheit 14 bei einer Aktivierung eines jeweiligen Sensors A bzw. B das automatische Öffnen der Tür ausgelöst werden kann.

Im Übrigen kann diese in den Fig. 3 bis 5 dargestellte Drehtüranlage 26 zumindest im Wesentlichen wieder denselben Aufbau besitzen wie die anhand der Fig. 1 und 2 beschriebene Schiebetüranlage 10. Dabei kann insbesondere die Zuordnung der Art und der Position eines jeweiligen Sensors wieder auf dieselbe Weise erfolgen, wie dies im Zusammenhang mit der Schiebetüranlage 10 beschrieben wurde.

### Bezugszeichenliste

- 10: Schiebetüranlage
- 12: Antriebsvorrichtung
- 14: Steuereinheit
- 16: Schiebeflügel
- 18: Festflügel
- 20: Datenübertragungssystem
- 22: Kontaktöffnung
- 24: Öffnung
- 26: Drehtüranlage
- 28: Drehflügel
- A: Ansteuerungssensor außen
- B: Ansteuerungssensor innen
- C: Anwesenheitssensor "Öffnen"
- D: Anwesenheitssensor "Öffnen"
- E: Anwesenheitssensor "Schließen"
- KA, KI: der Positionscodierung dienende Steckplätze eines jeweiligen Ansteuerungssensors
- SIS, SIO: der Positionscodierung dienende Steckplätze eines jeweiligen Anwesenheitssensors
- S1, S2: Anschlüsse der Steuereinheit

## Patentansprüche

1. Automatische Tür- oder Fensteranlage (10; 26) mit einer Antriebsvorrichtung (12), einer Steuereinheit (14), wenigstens einer Sensoreinheit (A-E) und wenigstens einem über die Antriebsvorrichtung (12) antreibbaren Flügel (16; 28), wobei die wenigstens eine Sensoreinheit (A-E) und die Steuereinheit (14) Teilnehmer eines Datenübertragungssystems (20) bilden und über dieses miteinander verbunden sind, **dadurch gekennzeichnet, dass** die wenigstens eine Sensoreinheit (A-E) zumindest zwei der Codierung unterschiedlicher Positionen der Sensoreinheit (A-E) an der Tür bzw. am Fenster dienende Steckplätze (KA, KI, SIS, SIO) für den Anschluss der Sensoreinheit (A-E) an das Datenübertragungssystem (20) und die wenigstens eine Sensoreinheit (A-E) darüber hinaus wenigstens einen dritten Steckplatz (Out) zur Weiterverbindung des Datenübertragungssystems (20) und den Anschluss eines weiteren Teilnehmers an das Datenübertragungssystems (20) umfasst.

2. Automatische Tür- oder Fensteranlage nach Anspruch 1,
**dadurch gekennzeichnet, dass** die steckplatzbezogene Positionscodierung einer jeweiligen Sensoreinheit (A-E) bei deren Anschluss an das Datenübertragungssystem (20) durch Einstecken eines Verbindungskabels oder dergleichen des Datenübertragungssystems (20) in einen betreffenden Steckplatz der wenigstens zwei der Codierung unterschiedlicher Positionen dienenden Steckplätze (KA, KI, SIS, SIO) der Sensoreinheit (A-E) erfolgt.

3. Automatische Tür- oder Fensteranlage nach Anspruch 2,
**dadurch gekennzeichnet, dass** ein für den Anschluss einer jeweiligen Sensoreinheit (A-E) an das Datenübertragungssystem (20) vorgesehenes Verbindungskabel oder dergleichen einen Stecker umfasst, der mit einem der Positionscodierung dienenden zusätzlichen Pin versehen ist.

4. Automatische Tür- oder Fensteranlage nach Anspruch 3,
**dadurch gekennzeichnet, dass** eine jeweilige Sensoreinheit (A-E) so ausgeführt ist, dass durch Abfrage des zusätzlichen Pins ermittelbar ist, über welchen Steckplatz (KA, KI, SIS, SIO) die Sensoreinheit (A-E) gegebenenfalls an das Datenübertragungssystem (20) angeschlossen wurde.

5. Automatische Tür- oder Fensteranlage nach einem der vorstehenden Ansprüche,
**dadurch gekennzeichnet, dass** das Datenübertragungssystem (20) zumindest für eine Kommunikation zwischen einer jeweiligen Sensoreinheit (A-E) und der Steuereinheit (14) ausgeführt ist.

6. Automatische Tür- oder Fensteranlage nach Anspruch 5,
**dadurch gekennzeichnet, dass** mehrere Sensoreinheiten (A-E) vorgesehen sind und das Datenübertragungssystem (20) zudem für eine Kommunikation zwischen den Sensoreinheiten (A-E) ausgeführt ist.

7. Automatische Tür- oder Fensteranlage nach einem der vorstehenden Ansprüche,
**dadurch gekennzeichnet, dass** eine jeweilige Sensoreinheit (A-E) als eine einen Mikroprozessor oder dergleichen umfassende intelligente Einheit so ausgeführt ist, dass sie den mit einem jeweiligen Anschluss an das Datenübertragungssystem (20) belegten Steckplatz (KA, KI, SIS, SIO) identifiziert und eine entsprechende Positionsmeldung für die Steuereinheit (14) erzeugt.

8. Automatische Tür- oder Fensteranlage nach Anspruch 7,
**dadurch gekennzeichnet, dass** eine jeweilige Sensoreinheit (A-E) zudem so ausgeführt ist, dass sie eine ihre Art spezifizierende Meldung für die Steuereinheit (14) erzeugt.

9. Automatische Tür- oder Fensteranlage nach Anspruch 7 oder 8,
**dadurch gekennzeichnet, dass** eine jeweilige Sensoreinheit (A-E) über die Steuereinheit (14) in Abhängigkeit von der steckplatzbezogenen Positionsmeldung und/oder der die Art der Sensoreinheit (A-E) spezifizierenden Meldung aktivierbar, parametrierbar, adressierbar und/oder dergleichen ist.

10. Automatische Tür- oder Fensteranlage nach einem der vorstehenden Ansprüche,
**dadurch gekennzeichnet, dass** die Steuereinheit (14) als von der wenigstens einen Sensoreinheit (A-E) getrennte Einheit ausgeführt ist.

11. Automatische Tür- oder Fensteranlage nach einem der Ansprüche 1 bis 9, **dadurch gekennzeichnet, dass** die Steuereinheit (14) in einer Sensoreinheit (A-E) integriert ist.

12. Automatische Tür- oder Fensteranlage nach einem der vorstehenden Ansprüche,
**dadurch gekennzeichnet, dass** das Datenübertragungssystem (20) eine Buseinrichtung umfasst.

13. Automatische Tür- oder Fensteranlage nach Anspruch 12,
**dadurch gekennzeichnet, dass** die Steuereinheit (14) als Bus-Master ausgeführt ist.

14. Automatische Tür- oder Fensteranlage nach einem der vorstehenden Ansprüche,
**dadurch gekennzeichnet, dass** sie wenigstens eine als Ansteuerungssensor (A, B) ausgeführte Sensoreinheit, wenigstens eine als Anwesenheitssensor (C, D, E) ausgeführte Sensoreinheit und/oder wenigstens eine als kombinierte Ansteuerungs- und Anwesenheitssensor ausgeführte Sensoreinheit umfasst.

15. Automatische Tür- oder Fensteranlage nach Anspruch 14,
**dadurch gekennzeichnet, dass** die Steuereinheit (14) so ausgeführt ist, dass sie in Abhängigkeit von einer jeweiligen steckplatzbezogenen Positionscodierung bezüglich eines jeweiligen Ansteuerungssensors (A, B) zwischen den Positionen Innen und Außen, bezüglich eines jeweiligen Anwesenheitssensors (C, D, E) zwischen den Funktionen Schließen und Öffnen und/oder bezüglich eines jeweiligen kombinierten Ansteuerungs- und Anwesenheitssensors zwischen den Positionen Innen und Außen unterscheidet.

## Claims

1. Automatic door or window system (10; 26) having a drive device (12), a control unit (14), at least one sensor unit (A-E) and at least one leaf/sash (16; 28) able to be driven by way of the drive device (12), wherein the at least one sensor unit (A-E) and the control unit (14) form subscribers of a data transmission system (20) and are connected to one another via said data transmission system, **characterized in that** the at least one sensor unit (A-E) comprises at least two slots (KA, KI, SIS, SIO), which are used for coding different positions of the sensor unit (A-E) on the door or on the window, for connecting the sensor unit (A-E) to the data transmission system (20) and the at least one sensor unit (A-E) furthermore comprises at least one third slot (Out) to further connect the data transmission system (20) and to connect a further subscriber to the data transmission system (20).

2. Automatic door or window system according to Claim 1,
**characterized in that** the slot-related position coding of a respective sensor unit (A-E) is carried out when said sensor unit is connected to the data transmission system (20) by plugging a connection cable, or the like, of the data transmission system (20) into a corresponding slot of the at least two slots (KA, KI, SIS, SIO), which are used for coding different positions, of the sensor unit (A-E).

3. Automatic door or window system according to Claim 2,
**characterized in that** a connection cable, or the like, that is provided for connecting a respective sensor unit (A-E) to the data transmission system (20) comprises a plug that is provided with an additional pin that is used for position coding.

4. Automatic door or window system according to Claim 3,
**characterized in that** a respective sensor unit (A-E) is designed in such a way that, by checking the additional pin, it is possible to ascertain the slot (KA, KI, SIS, SIO) via which the sensor unit (A-E) was possibly connected to the data transmission system (20).

5. Automatic door or window system according to one of the preceding claims,
**characterized in that** the data transmission system (20) is designed at least for communication between a respective sensor unit (A-E) and the control unit (14).

6. Automatic door or window system according to Claim 5,
**characterized in that** a plurality of sensor units (A-E) are provided and the data transmission system (20) is additionally designed for communication between the sensor units (A-E).

7. Automatic door or window system according to one of the preceding claims,
**characterized in that** a respective sensor unit (A-E) is in the form of an intelligent unit comprising a microprocessor, or the like, in such a way that it identifies the slot (KA, KI, SIS, SIO) occupied by a respective connection to the data transmission system (20) and generates a corresponding position notification for the control unit (14).

8. Automatic door or window system according to Claim 7,
**characterized in that** a respective sensor unit (A-E) is additionally designed in such a way that it generates a notification specifying its type for the control unit (14) .

9. Automatic door or window system according to Claim 7 or 8,
**characterized in that** a respective sensor unit (A-E) is able to be activated, parameterized, addressed and/or the like by the control unit (14) depending on the slot-related position notification and/or the notification specifying the type of the sensor unit (A-E).

10. Automatic door or window system according to one of the preceding claims,
**characterized in that** the control unit (14) is in the form of a unit that is separate from the at least one sensor unit (A-E).

11. Automatic door or window system according to one of Claims 1 to 9,
**characterized in that** the control unit (14) is integrated in a sensor unit (A-E).

12. Automatic door or window system according to one of the preceding claims,
**characterized in that** the data transmission system (20) comprises a bus device.

13. Automatic door or window system according to Claim 12,
**characterized in that** the control unit (14) is in the form of a bus master.

14. Automatic door or window system according to one of the preceding claims,
**characterized in that** it comprises at least one sensor unit in the form of an actuation sensor (A, B), at least one sensor unit in the form of a presence sensor (C, D, E) and/or at least one sensor unit in the form of a combined actuation and presence sensor.

15. Automatic door or window system according to Claim 14,
**characterized in that** the control unit (14) is designed in such a way that, depending on a respective slot-related position coding, it distinguishes between the inside and outside positions with respect to a respective actuation sensor (A, B), between the closing and opening functions with respect to a respective presence sensor (C, D, E) and/or between the inside and outside positions with respect to a respective combined actuation and presence sensor.

## Revendications

1. Installation de porte ou de fenêtre automatique (10 ; 26) comprenant un dispositif d'entraînement (12), une unité de commande (14), au moins une unité de détection (A-E) et au moins un vantail (16 ; 28) pouvant être entraîné par le dispositif d'entraînement (12), l'au moins une unité de détection (A-E) et l'unité de commande (14) formant des contributeurs à un système de transmission de données (20) et étant reliées entre elles par celui-ci, **caractérisée en ce que** l'au moins une unité de détection (A-E) comporte au moins deux emplacements d'enfichage (KA, KI, SIS, SIO) qui servent au codage de différentes positions de l'unité de détection (A-E) sur la porte ou la fenêtre et qui sont destinés à raccorder l'unité de détection (A-E) au système de transmission de données (20) et l'au moins une unité de détection (A-E) comprend en outre au moins un troisième emplacement d'enfichage (Out) destiné à relier ultérieurement le système de transmission de données (20) et à raccorder un autre contributeur au système de transmission de données (20).

2. Installation de porte ou de fenêtre automatique selon la revendication 1,
**caractérisée en ce que** le codage de position, lié à l'emplacement d'enfichage d'une unité de détection (A-E) respective est effectué, lors du raccordement de celle-ci au système de transmission de données (20), par insertion d'un câble de liaison ou similaire du système de transmission de données (20) dans un emplacement d'enfichage correspondant des au moins deux emplacements d'enfichage de l'unité de détection (A-E) qui servent au codage de différentes positions (KA, KI, SIS, SIO).

3. Installation de porte ou de fenêtre automatique selon la revendication 2,
**caractérisée en ce qu'**un câble de liaison ou similaire prévu pour raccorder une unité de détection (A-E) respective au système de transmission de données (20) comprend un connecteur qui est pourvu d'une broche supplémentaire qui est utilisée pour le codage de position.

4. Installation de porte ou de fenêtre automatique selon la revendication 3,
**caractérisée en ce qu'**une unité de détection (A-E) respective est conçue de manière à pouvoir déterminer, par interrogation de la broche supplémentaire, quel est l'emplacement d'enfichage (KA, KI, SIS, SIO) où l'unité de détection (A-E) a été éventuellement raccordée au système de transmission de données (20).

5. Installation de porte ou de fenêtre automatique selon l'une des revendications précédentes,
**caractérisée en ce que** le système de transmission de données (20) est conçu au moins pour la communication entre une unité de détection (A-E) respective et l'unité de commande (14).

6. Installation de porte ou de fenêtre automatique selon la revendication 5,
**caractérisée en ce que** plusieurs unités de détection (A-E) sont prévues et le système de transmission de données (20) est également conçu pour la communication entre les unités de détection (A-E).

7. Installation de porte ou de fenêtre automatique selon l'une des revendications précédentes,
**caractérisée en ce qu'**une unité de détection (A-E) respective est conçue comme une unité intelligente comprenant un microprocesseur ou similaire de façon à identifier l'emplacement d'enfichage (KA, KI, SIS, SIO) occupé par un raccordement respectif au système de transmission de données (20) et générer un message de position correspondant à destination de l'unité de commande (14).

8. Installation de porte ou de fenêtre automatique selon la revendication 7,
**caractérisée en ce qu'**une unité de détection (A-E) respective est également conçue de façon à générer un message spécifiant le type de celle-ci à destination de l'unité de commande (14).

9. Installation de porte ou de fenêtre automatique selon la revendication 7 ou 8,
**caractérisée en ce qu'**une unité de détection (A-E) respective peut être activée, paramétrée, adressée et/ou similaire par le biais de l'unité de commande (14) en fonction du message de position lié à l'emplacement d'enfichage et/ou du message spécifiant le type de l'unité de détection (A-E).

10. Installation de porte ou de fenêtre automatique selon l'une des revendications précédentes,
**caractérisée en ce que** l'unité de commande (14) est conçue comme une unité distincte de l'au moins une unité de détection (A-E).

11. Installation de porte ou de fenêtre automatique selon l'une des revendications 1 à 9,
**caractérisée en ce que** l'unité de commande (14) est intégrée dans une unité de détection (A-E).

12. Installation de porte ou de fenêtre automatique selon l'une des revendications précédentes,
**caractérisée en ce que** le système de transmission de données (20) comprend un module de bus.

13. Installation de porte ou de fenêtre automatique selon la revendication 12,
**caractérisée en ce que** l'unité de commande (14) est conçue comme un bus-maître.

14. Installation de porte ou de fenêtre automatique selon l'une des revendications précédentes,
**caractérisée en ce qu'**elle comprend au moins une unité de détection conçue comme un capteur de commande (A, B), au moins une unité de détection conçue comme un capteur de présence (C, D, E) et/ou au moins une unité de détection conçue comme un capteur combiné de commande et capteur de présence.

15. Installation de porte ou de fenêtre automatique selon la revendication 14,
**caractérisée en ce que** l'unité de commande (14) est conçue de façon à faire la distinction, en fonction d'un codage de position respectif lié à l'emplacement d'enfichage, entre les positions Intérieure et Extérieure par rapport à un capteur de commande respectif (A, B), et entre les fonctions Fermer et Ouvrir par rapport à un capteur de présence respectif (C, D, E) et/ou entre les positions Intérieure et Extérieure par rapport à un capteur combiné de commande et de présence respectif.
